# EUROPÄISCHE PATENTSCHRIFT

(11) **EP 1 198 418 B1**
(45) Veröffentlichungstag und Bekanntmachung des Hinweises auf die Patenterteilung: **11.05.2005**
(21) Anmeldenummer: 00956054.1
(22) Anmeldetag: 03.07.2000
(51) Int. Cl.: C02F 1/32, C02F 103/02

(54) **WASSERVERSORGUNGSEINHEIT**
WATER SUPPLY UNIT
UNITE D'APPROVISIONNEMENT EN EAU

(30) Priorität: 02.07.1999 DE 29911463 U
(43) Veröffentlichungstag der Anmeldung: 24.04.2002
(73) Patentinhaber: Wismeth, Wolfgang, 90765 Fürth (DE)
(72) Erfinder: Wismeth, Wolfgang, 90765 Fürth (DE)
(74) Vertreter: Schuhmann, Albrecht
(86) Internationale Anmeldenummer: PCT/DE2000/002110
(87) Internationale Veröffentlichungsnummer: WO 2001/002301

(56) Entgegenhaltungen:
- DE-A- 3 840 364
- DE-A- 4 104 033
- DE-A- 19 619 022
- FR-A- 2 644 812
- GB-A- 2 261 370
- US-A- 5 106 495

## Beschreibung

Die vorliegende Erfindung betrifft eine Versorgungseinheit für die Versorgung von Personen mit entkeimtem Wasser für Hygienezwecke und/oder als Trinkwasser mit den Merkmalen des Oberbegriffs des Anspruchs 1.

Versorgungseinheiten für die Versorgung von Personen mit entkeimtem Wasser für Hygienezwecke und/oder als Trinkwasser, bestehend aus einem ersten, wasseraufnehmenden Modul, einem zweiten, wasserentkeimenden Modul, und wenigstens einem dritten, wasserabgebenden Modul, wobei die Module über Leitungen miteinander verbunden sind und das zweite und dritte Modul in eine bauliche Einheit integriert sind,. sind im Grunde aus dem Gebiet des Bauwesens und der Freizeit bekannt. Sie sind in der Regel zumindest teilweise an allgemeine Versorgungsleitungen angeschlossen. Die Entkeimung erfolgt in der Regel auf herkömmlicher Basis chemisch. Eine Anlage mit einer mehrstufigen Filter- und Entkeimungsanlage, die mittels Solarstrom versorgt wird, ist aus der FR-A-26 44 812 bekannt.

Aufgabe der vorliegenden Erfindung ist es, eine solche Versorgungseinheit zu schaffen, die autark ist, die mit geringstem Energiebedarf arbeitsfähig ist und die mobil jederzeit transportierbar und aufstellbar ist.

Diese Aufgabe wird mit den in Anspruch 1 genannten Merkmalen gelöst. Vorteilhafte Ausführungen und Weiterentwicklungen der Erfindung sind in den weiteren Ansprüchen umfaßt.

Erfindungsgemäß ist eine Versorgungseinheit für die Versorgung von Personen mit entkeimtem Wasser für Hygienezwecke und/oder als Trinkwasser, bestehend aus einem ersten, wasseraufnehmenden Modul, einem zweiten, wasserentkeimenden Modul, und wenigstens einem dritten, wasserabgebenden Modul, wobei die Module über Leitungen miteinander verbunden sind und das zweite und dritte Modul in eine bauliche Einheit integriert sind, wobei das aufgenommene Wasser einem Speicher zugeführt wird, wobei in dem Speicher für die Entkeimung des Wassers eine ultraviolette Strahlen emittierende Strahlereinheit angeordnet ist, die durch eine Niedervolt-Gleichstromquelle mit wenigstens einem Solarmodul versorgt wird und wobei das entkeimte Wasser dem wenigstens einen wasserabgebenden Modul zugeführt wird, dadurch gekennzeichnet, daß die bauliche Einheit aus wenigstens einer transportablen Containerzelle mit sanitären Anlagen besteht, wobei innen oder innen und außen an der Containerzelle wasserabgebende Module wie Wasserhähne, Duschköpfe, oder Toiletten angeordnet sind.

Mit diesen Merkmalen ist es möglich, abseits jeder öffentlichen Versorgung, d.h. insbesondere in unerschlossenen Gebieten, eine Versorgung mit Wasser für Hygiene- und Trinkwasserzwecke sicherzustellen, Da derartige Versorgungseinheiten leicht transportierbar und aufstellbar sind, kann auch auf plötzlichen lokalen Bedarf reagiert werden. Die Ultraviolett--Strahlenquelle ist überdies dazu geeignet, neben üblichen Keimen auch Parasiten zu vernichten, so daß der Einsatz auch in Gebieten mit problematischen natürlichen Wässern möglich ist.

Das wasseraufnehmende Modul ist vorzugsweise eine Tiefbrunnenpumpe. Das oder die Solarmodule sind vorteilhafterweise auf dem Dach der Containerzelle angeordnet. Vorteilhafterweise sind wenigstens zwei Containerzellen vorhanden, zwischen denen jeweils Übergänge in Gehäuseform angeordnet sind, in denen die Speicher angeordnet sind.

Nach einer vorteilhaften Ausführung der Erfindung sind Mittel für die Erhitzung des entkeimten Wassers vorhanden. Vorzugsweise wird das Brauchwasser zur Reinigung über eine Ableitung einem Filtermodul zugeleitet und das gereinigte Brauchwasser wird in den Speicher zurückgeführt.

Im Folgenden wird die Erfindung anhand einer Zeichnungen beispielhaft näher beschrieben.

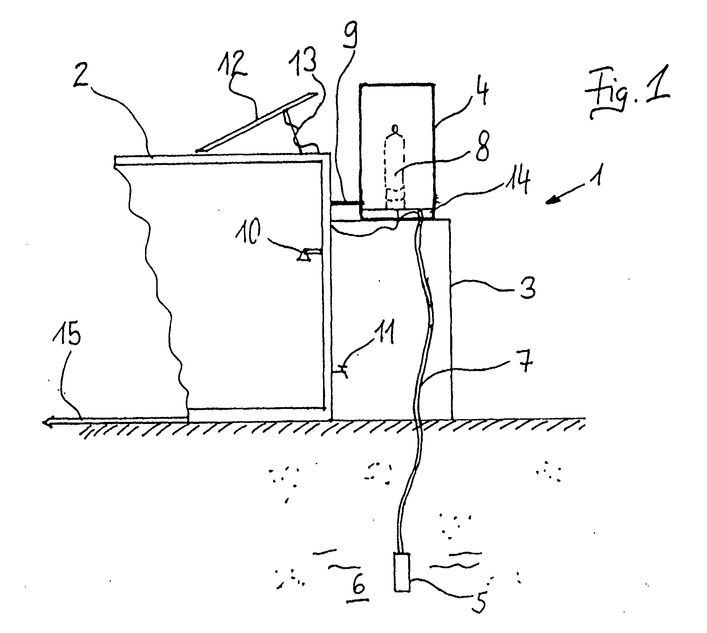

Fig. 1 zeigt eine erfindungsgemäße Versorgungseinheit 1. Neben einer Containerzelle 2 ist auf einem Gestell 3 ein Speicher 4 für Wasser angeordnet. Das Wasser wird aus einem Tiefenbrunnen 6 mittels einer Tiefenbrunnenpumpe 5 über eine Zuleitung 7 in den Speicher 4 gepumpt. Eine solche Tiefenbrunnenpumpe ist beispielsweise eine Solenoid-Tauchpumpe, die mit Niedervoltspannung betreibbar ist und von einem Solarmodul versorgt wird. Dank einer speziellen Kondensator-Kurzzeit-Speicherschaltung fördert eine solche Pumpe bereits mit weniger als 1 W Solarmodulleistung Wasser. Es ist möglich, 200 bis 1000 Liter/Tag zu fördern. Die Fördertiefe beträgt bei neuen Modellen weitaus mehr, als 10m.

In dem Speicher 4 ist eine Strahlereinheit, bestehend aus einem wasserdichten UV-Strahler, umhüllt mit Spezial-Quarzglas und versehen mit einer elektronischen Steuereinheit (beschrieben beispielsweise in der Anmeldung DE-U-299 10 816.3) für die Emittierung ultravioletter Strahlen, vorzugsweise mit einer Wellenlänge von 254 nm, angeordnet. Deren Strahlen breiten sich in dem Speicherraum aus und zerstören die Erbinformation infektiöser Mikroorganismen. Die Strahlereinheit 8 mit der Steuereinheit wird durch eine Niedervoltgleichstromquelle versorgt.

Die Niedervoltgleichstromquelle für die Tiefbrunnenpumpe 5 und die Strahlereinheit 8 ist wenigstens ein Solarmodul 12, das auf dem Dach der Containerzelle 2 angeordnet ist. Kabel 13 führen in einen Boden 14 des Speichers 4, und sind dort mit den Steuereinheiten der Tiefenbrunnenpumpe 5 und der Strahlereinheit 8.

Der Speicher 4 kann als Durchlaufspeicher mit ständiger Bestrahlung betrieben werden, oder aber auch periodisch aufgefüllt und periodisch entkeimt werden. Er ist über eine Zuleitung 9 mit der Wasserinstallation der Containerzelle 2 verbunden und versorgt so beispielsweise einen Duschkopf 10 und einen Wasserhahn 11. In der vorliegenden beispielhaften Ausführung ist der Wasserhahn 11 für die Trinkwasserentnahme außen an der Containerzelle angeordnet und die sanitären Anlagen befinden sich in der Containerzelle 2. Damit ist eine gleichzeitige, ungestörte Nutzung möglich. Wie oben ausgeführt, kann es wirtschaftlich sinnvoll sein, mehrere Containerzellen durch Speicher/Steuerungseinheiten zu verbinden.

## Patentansprüche

1. Versorgungseinheit für die Versorgung von Personen mit entkeimtem Wasser für Hygienezwecke und/oder als Trinkwasser,
bestehend aus einem ersten, wasseraufnehmenden Modul,
einem zweiten, wasserentkeimenden Modul,
und wenigstens einem dritten, wasserabgebenden Modul,
wobei die Module über Leitungen miteinander verbunden sind und das zweite und dritte Modul in eine bauliche Einheit integriert sind,
wobei das aufgenommene Wasser einem Speicher (4) zugeführt wird,
wobei in dem Speicher (4) für die Entkeimung des Wassers eine ultraviolette Strahlen emittierende Strahlereinheit (8) angeordnet ist, die durch eine Niedervolt-Gleichstromquelle mit wenigstens einem Solarmodul versorgt wird,
und wobei das entkeimte Wasser dem wenigstens einen wasserabgebenden Modul (10, 11) zugeführt wird,
**dadurch gekennzeichnet,**
**daß** die bauliche Einheit aus wenigstens einer transportablen Containerzelle mit sanitären Anlagen besteht,
wobei innen oder innen und außen an der Containerzelle wasserabgebende Module wie Wasserhähne (11), Duschköpfe (10) oder Toiletten angeordnet sind.

2. Versorgungseinheit nach Anspruch 1,
**dadurch gekennzeichnet,**
**daß** das wasseraufnehmende Modul eine Tiefbrunnenpumpe (5) ist,

3. Versorgungseinheit nach einem der Ansprüche 1 oder 2,
**dadurch gekennzeichnet,**
**daß** das oder die Solarmodule (12) auf dem Dach der Containerzelle (2) angeordnet sind.

4. Versorgungseinheit nach einem der vorhergehenden Ansprüche,
**dadurch gekennzeichnet,**
**daß** wenigstens zwei Containerzellen (2) vorhanden sind,
**daß** zwischen jeweils zwei Containerzellen Übergänge in Gehäuseform angeordnet sind,
und **daß** in den Übergängen Speicher angeordnet sind.

5. Versorgungseinheit nach einem der vorhergehenden Ansprüche,
**dadurch gekennzeichnet,**
**daß** Mittel für die Erhitzung des entkeimten Wassers vorhanden sind.

6. Versorgungseinheit nach einem der vorhergehenden Ansprüche,
**dadurch gekennzeichnet,**
**daß** das Brauchwasser zur Reinigung einem Filtermodul zugeleitet wird und daß das gereinigte Brauchwasser in den Speicher zurückgeführt wird.

## Claims

1. A supply unit for supplying persons with sterilised water for hygiene purposes and/or as drinking water,
consisting of a first, water-receiving module,
a second, water-sterilising module,
and at least one third, water-dispensing module,
wherein the modules are interconnected via conduits and the second and third module are integrated into a structural unit,
wherein the received water is supplied to a reservoir (4),
wherein a radiation unit (8) emitting ultraviolet rays is arranged in the reservoir (4) for sterilising the water, which unit is supplied by means of a low-voltage direct current source comprising at least one solar module,
and wherein the sterilised water is supplied to the at least one water-dispensing module (10, 11),
**characterised in that** the structural unit consists of at least one transportable container cell with sanitary facilities,
wherein water-dispensing modules such as water taps (11), shower heads (10) or toilets are arranged on the inside or on the inside and the outside of the container cell.

2. A supply unit according to Claim 1,
**characterised**
**in that** the water-receiving module is a deep-well pump (5).

3. A supply unit according to one of Claims 1 or 2,
**characterised**
**in that** the solar module or modules (12) are arranged on the roof of the container cell (2).

4. A supply unit according to any one of the preceding claims,
**characterised**
**in that** there are at least two container cells (2),
**in that** passages in the form of housings are arranged between each two container cells,
and **in that** reservoirs are arranged in the passages.

5. A supply unit according to any one of the preceding claims,
**characterised**
**in that** there are means for heating the sterilised water.

6. A supply unit according to any one of the preceding claims,
**characterised**
**in that** the water for use is supplied to a filter module for purification and in that the purified water for use is returned into the reservoir.

## Revendications

1. Unité d'alimentation destinée à alimenter des personnes en eau stérilisée dans un but d'hygiène et/ou en eau potable,
laquelle unité d'alimentation est constituée d'un premier module de réception d'eau,
d'un deuxième module de stérilisation de l'eau, et
d'au moins un troisième module d'évacuation d'eau,
les modules étant reliés par des conduites et les deuxième et troisième modules étant intégrés dans une unité de bâti,
l'eau reçue étant amenée à un accumulateur (4),
une unité de rayonnement (8) émettant des rayons ultraviolets étant disposée dans l'accumulateur (4) pour réaliser la stérilisation et étant alimentée par une source de courant continu à basse tension comportant au moins un module solaire, et
l'eau stérilisée étant amenée à au moins un module d'évacuation d'eau (10, 11),
**caractérisée en ce que**
l'unité de bâti est constituée d'au moins une cellule à conteneur transportable comportant des installations sanitaires,
des modules d'évacuation d'eau tels que des robinets (11), des pommes de douche (10) ou des toilettes étant disposés à l'intérieur ou à l'intérieur et à l'extérieur de la cellule à conteneur.

2. Unité d'alimentation selon la revendication 1, **caractérisée en ce que** le module de réception d'eau est une pompe reliée à un puits profond (5).

3. Unité d'alimentation selon l'une des revendications 1 ou 2, **caractérisée en ce que** le module ou les modules solaires (12) sont disposés sur le toit de la cellule à conteneur (2).

4. Unité d'alimentation selon l'une des revendications précédentes,
**caractérisée ce que**
il est prévu au moins deux cellules à conteneur (2),
en ce que des passages se présentant sous la forme de boîtiers sont disposés entre deux cellules à conteneur, et
en ce que des accumulateurs sont disposés dans les passages.

5. Unité d'alimentation selon l'une des revendications précédentes,
**caractérisée en ce que**
il est prévu des moyens pour chauffer l'eau stérilisée.

6. Unité d'alimentation selon l'une des revendications précédentes,
**caractérisée en ce que**
l'eau est amenée à un module de filtrage pour être nettoyée et **en ce que** l'eau nettoyée est ramenée à l'accumulateur.
